# EUROPEAN PATENT APPLICATION

(11) **EP 4 666 870 A1**
(43) Date of publication of application: **24.12.2025**
(21) Application number: 24756385.1
(22) Date of filing: 13.02.2024
(51) Int. Cl.: A23L 19/20, A23D 9/007, A23D 9/05, A23L 29/256, A23P 10/30, A23P 10/35

(54) **GREEN SAUCE OF PICKLED OLIVES AND METHOD FOR PAIRING SAME**

(30) Priority: 17.02.2023 ES 202330256 U
(71) Applicant: Caviaroli, S.L., 08292 Esparreguera (Barcelona) (ES)
(72) Inventor: RAMON REAL, Ramon, 08230 MATADEPERA (Barcelona) (ES); RAMON FERRES, Ramon Maria, 08292 ESPARREGUERA (Barcelona) (ES)
(74) Representative: Durán-Corretjer, S.L.P.
(86) International application number: PCT/ES2024/070079
(87) International publication number: WO 2024/170810

(57) **Abstract**

The present invention relates to a food composition in liquid form obtained from olives which have undergone a prior traditional pickling process, characterized in that it comprises between 0.002 % and 0.4 % (w/w) of benzaldehyde, between 0.002 % and 0.25 % (w/w) of 2-methylbutanoic acid and between 0.012 % and 0.75 % (w/w) of nonanal, and to a method for pairing same with a product of similar composition to enhance the sensory character of the combination.

## Description

The present invention relates to a food composition in liquid form obtained from olives which have undergone a previous traditional pickling process. Knowing the chemical composition of said green sauce of pickled olives, it is possible to pair it with other foods of similar composition and, thereby, enhance the sensory character of said foods.

In traditional cuisine, widely cultivated and developed over thousands of years, the combination of foods of different nature, also called pairing, has been commonly used as a method to enhance the flavour of products. However, until now, such combinations of different foods have been of trial and error, in which various foods are tasted together and, depending on the sensory perception of the diners, each of these combinations has settled into the gastronomic culture. For example, it is well known that white wine pairs with fish, red meat with red wine, among many other well-known combinations.

However, there has usually been no way other than the above trial and error to determine which foods function well in combination with others, creating a need on the part of the culinary community.

Recently, modern cuisine has changed this by virtue of a more scientific approach to the subject, leading to the emergence of "molecular gastronomy". This branch of gastronomy focuses on the molecular components or individual chemical compounds of foods, and the sensory capabilities derived from each of them, to be combined with other foods that have the same components. In this way, their taste and smell are enhanced, making the sensory experience much better when such a combination is consumed.

Therefore, there is a need to know for each food which are the chemical compounds that are responsible for the taste or odour and thus to be able to pair them with other foods with which they share such compounds. The authors of the present invention have developed a method that can determine the most important chemical compounds in a liquid composition comprising olives that have undergone a previous traditional pickling process. In this way, by knowing which are the dominant molecules or compounds, it will be possible to effectively combine with other solid or liquid food products, which share at least one of the dominant molecules, which is known as the aromatic map. This is the first time that the aromatic profile of a product comprising pickled olives has been obtained, and it represents a breakthrough by creating a precedent on the characterization of a processed food product with the aim of obtaining an aromatic map and searching for possible combinations with other foods.

In particular, the present invention relates to a liquid green sauce of pickled olives which is an effective food pairing for foods in which benzaldehyde, 2-methylbutanoic acid, nonanal, acetic acid, 2-methoxyphenol, or 2,4-decadienal are present among the main components, while being a food product in itself and without the need to be used solely as a food pairing.

The liquid food composition or liquid green sauce of crushed pickled olives of the present invention is characterized in that it comprises between 0.002 % and 0.4 % (w/w) of benzaldehyde, between 0.002 % and 0.25 % (w/w) of 2-methylbutanoic acid and between 0.012 % and 0.75 % (w/w) of nonanal.

In a preferred embodiment, said liquid food composition is characterized in that it also comprises between 0.6 % and 12 % (w/w) of acetic acid.

In another preferred embodiment, said liquid food composition is characterized in that it also comprises between 0.01 % and 0.25 % (w/w) of 2-methoxyphenol.

In another preferred embodiment, said liquid food composition is characterized in that it also comprises between 0.002 % and 0.04 % (w/w) of 2,4-decadienal.

In another preferred embodiment, said liquid food composition is characterized in that it also comprises between 0.001 % and 0.03 % (w/w) of humulene.

In another preferred embodiment, said liquid food composition is characterized in that it also comprises between 0.01 % and 0.2 % (w/w) of ethyl benzenepropanoate.

In another even more preferred embodiment, said liquid food composition is characterized in that it also comprises between 0.01 % and 0.1 % (w/w) of dimethyl sulfoxide.

In another even more preferred embodiment, said liquid food composition is characterized in that it also comprises between 0.04 % and 0.25 % (w/w) of (E)-2-octenal.

In another even more preferred embodiment, said liquid food composition is characterized in that it also comprises between 0.1 % and 0.6 % (w/w) of beta-myrcene.

In another preferred embodiment, said liquid food composition is characterized in that it comprises sulfur compounds selected from diallylsulfur, methanesulfonyl chloride, methyl-2-propenyl trisulfide, allyl isothiocyanate or a mixture thereof.

In another even more preferred embodiment, said liquid food composition is characterized in that it comprises between 0.003 % and 0.1 % (w/w) of diallyl sulfide.

In another even more preferred embodiment, said liquid food composition is characterized in that it comprises between 0.003 % and 0.09 % (w/w) of methanesulfonyl chloride.

In another even more preferred embodiment, said liquid food composition is characterized in that it comprises between 0.003 % and 0.08 % (w/w) of methyl-2-propenyl trisulfide.

In another even more preferred embodiment, said liquid food composition is characterized in that it comprises between 0.01 % and 0.27 % (w/w) of allyl isothiocyanate.

In another preferred embodiment, said liquid food composition is characterized in that it comprises phenolic compounds selected from creosol, 4-ethyl-2-methoxyphenol, p-creosol, 2-methoxy-4-propylphenol, 4-ethylphenol or a mixture thereof.

In another even more preferred embodiment, said liquid food composition is characterized in that it comprises between 0.1 % and 2.9 % (w/w) of creosol.

In another even more preferred embodiment, said liquid food composition is characterized in that it comprises between 0.002 % and 0.06 % (w/w) of 4-ethyl-2-methoxyphenol.

In another even more preferred embodiment, said liquid food composition is characterized in that it comprises between 0.002 % and 0.06 % (w/w) of p-creosol.

In another even more preferred embodiment, said liquid food composition is characterized in that it comprises between 0.0008 % and 0.02 % (w/w) of 2-methoxy-4-propylphenol.

In another even more preferred embodiment, said liquid food composition is characterized in that it comprises between 0.2 % and 6.4 % (w/w) of 4-ethylphenol. In a preferred embodiment, said liquid food composition is characterized in that it is contained inside a spherical capsule. In a more preferable embodiment, said liquid food composition is characterized in that said capsule in which it is contained is formed by an alginate film of an alkaline-earth metal selected from calcium and magnesium. In an even more preferred embodiment, the alkaline-earth metal is calcium.

In a preferred embodiment, said liquid food composition is characterized in that the size of said capsules is between 2 mm and 50 mm in diameter, preferably between 4 mm and 50 mm in diameter, and more preferably between 8 mm and 50 mm in diameter.

In another embodiment, said food composition is used in combination with a food product selected from cabbage, cauliflower, horseradish, capers, black truffle, arugula, hops, almonds, wasabi, almonds, cloves, smoked cloves, green olive, cheese, black pepper, mustard, citrus fruits, cinnamon, onion, asparagus, anchovy, celery, tomato, piparra, coriander, rosemary, oregano, thyme, citrus peel, mint, ginger, cumin, cinnamon, anchovy, parsley, basil, capsicum, chili, or a combination thereof. These products may be natural, processed or pickled.

Another object of the present invention is to disclose a pairing method which involves combining the food composition of the present invention with one or more food products comprising the same compounds as said food composition of the present invention.

In one embodiment, said food products for pairing with the food composition of the present invention are selected from the group comprising cabbage, cauliflower, horseradish, capers, black truffle, arugula, hops, almonds, wasabi, almonds, cloves, cloves, smoked cloves, green olives, cheese, black pepper, mustard, citrus fruits, cinnamon, onion, asparagus, anchovy, celery, tomato, piparra, coriander, rosemary, oregano, thyme, citrus fruit peel, mint, ginger, cumin, cinnamon, anchovy, parsley, basil, capsicum, chili, or a combination thereof. These products may be natural, processed or pickled.

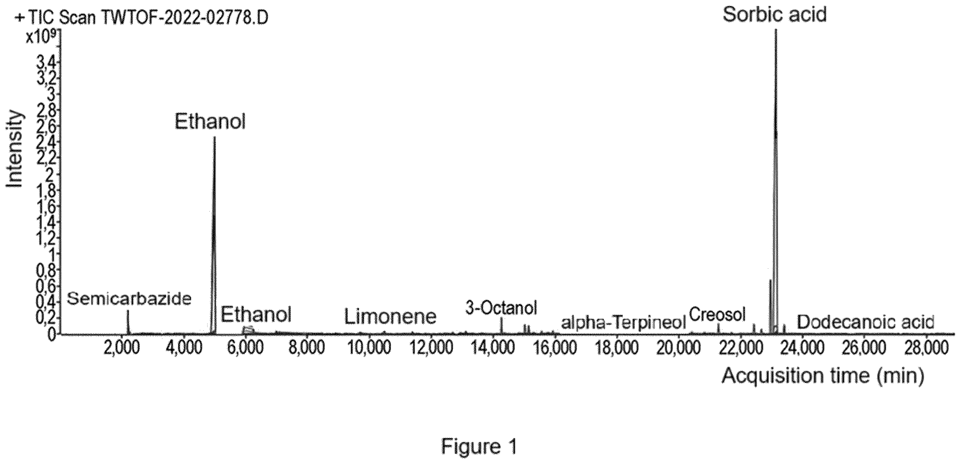

Figure 1 shows the results of a chromatography in which some of the components present in the liquid green olive sauce can be observed, since not all of them exceed the detection threshold to be detectable in the chromatography.

In the following, the present invention is illustrated by means of examples, which do not constitute a limitation thereof.

### EXAMPLES

### Example 1: Preparation of liquid green olive sauce

To obtain the liquid green olive sauce, a very particular process is followed, characterized by the following steps:
1. The olives are harvested and sorted by size to separate the larger sizes from the smaller ones. Depending on the variety of liquid green olive sauce to be produced, one type of olive or another will be used (for example, for Sevillian style liquid green olive sauce, manzanilla, hojiblanca and gordal olives are used).
2. Once separated, the olives are subjected to a "cooking" process, which consists in subjecting them to a treatment with sodium hydroxide (NaOH) at low dilution. In this way, the polyphenols present in the skin of the olives are hydrolysed. This causes loss of the bitter taste characteristic of untreated olives.
3. The treated olives are washed several times to remove the excess NaOH.
4. Once washed, the product is left to rest, so that the lactic acid bacteria present, previously inhibited by the polyphenols, carry out a fermentation and transform the sugars into lactic acid. This reduces the pH to values below 4.3, which causes them to become a product safe for human consumption and to acquire their characteristic flavour.
5. Once a suitable acid pH is reached, the lactic acid bacteria begin to die. At this point, common salt (NaCl) is added until the concentration reaches about 8 % (w/v). At this point, a shelf-stable product is obtained, which is usually sorted by size one last time.
6. The product is washed to reduce the amount of salt and packed in brine to undergo a pasteurization process, resulting in the pickled product.
7. Once the pickled olives are obtained, the product is subjected to a grinding and filtering step, thus obtaining an olive juice and separating a large part of the fibre from the flesh of the fruit.
8. Finally, a recipe is prepared that includes water and other ingredients that will be responsible for the final flavour (see Table 4), and some additives to obtain texture, acidity and shelf life.

### Example 2: Characterization of the aromatic profile of the liquid green olive sauce

In order to determine the most important molecules of the liquid green olive sauce obtained by the production process of Example 1, and also the concentrations thereof, several steps were performed in the laboratory.

First, liquid green olive sauce samples were weighed into 20 mL vials, extracted by solid-phase microextraction (SPME) with a 2 cm CAR/DVB/PDMS fibre (Supelco^{®}) following a specific protocol developed for these samples, and then analysed by GC-ToF-MS (Agilent 7890B/ BT-TOF LECO) on a polar column. Over time, 3-octanol was added extemporaneously at 0.0788 mg/kg to be used as a control.

The peaks were integrated using the in-house MassTwist software with a deltaRI of 30. The peak areas are converted to µg/kg eq of 3-octanol (Figure 1), and statistical analysis is performed with R-CRAN.

After analysing the results, the aromatic compounds that make up the liquid green olive sauce were found, reaching more than 108 volatile compounds that were identified and mark the uniqueness of this sauce. The olfactory impact of these molecules was evaluated (Table 1), and based on the concentrations analysed and the perception threshold, the minimum concentration at which each of the molecules present in the liquid green olive sauce would be detectable to the sense of smell was calculated. The most important molecules obtained were benzaldehyde, 2-methylbutanoic acid, nonanal, acetic acid, dimethyl sulfoxide (DMSO), 2-(E)-octenal and beta-myrcene, because their relative olfactory activity is higher than 1. The presence in high concentration (forming almost 50 % of the chromatogram) of sorbic acid is detectable, of which the ethyl ester and methyl ester are also found; however, these compounds do not provide high olfactory activity.

**Table 1. Analysis of the relative olfactory activity of some of the main compounds in liquid green olive sauce.**

| **Compound** | **Description** | **Relative olfactory activity** |
|---|---|---|
| Benzaldehyde | almond, fruit, burnt sweet | 27 |
| 2-Methylbutanoic acid | acid, cheese, fruit | 19 |
| Nonanal | floral, citrus, grassy | 12 |
| Acetic acid | vinegar, acid, spicy | 4 |
| 2-Methoxyphenol | smoke, medical, burned | 3 |
| 2,4-Decadienal | aldehyde, dentist, fat | 3 |
| Humulene | fresh, woody, citrus | 3 |
| Ethyl benzenepropanoate | floral, fruity, sweet | 2 |
| Dimethyl sulfoxide | | 1 |
| (E)-2-Octenal | fat, walnut, almond | 1 |
| beta-Myrcene | balsamic, herbaceous, metal | 1 |
| Hexyl acetate | fruit, floral, pear | 0.47 |
| 1,1-Diethoxyethane | fruit, butter, cream | 0.29 |
| 2-Phenylethyl acetate | floral, rose, honey | 0.22 |
| Benzeneacetaldehyde | floral, honey, rose | 0.21 |
| Phenylethyl alcohol | rose, floral, honey | 0.14 |
| 2-Buten-1-one, 1-(2,6,6-trimethyl-1,3-cyclohexadien-1-yl)- | floral, apple, sweet | 0.14 |
| Benzyl alcohol | sweet, floral, fruit | 0.14 |
| 4-Ethylphenol | phenol, animal, leather | 0.10 |
| Hexanal | grass, herbaceous, fat | 0.10 |

### Example 3. Combining liquid green olive sauce with other foods

Based on the characterization of the liquid green olive sauce performed following the protocol of Example 2, where the aromatic profile was obtained, a study was performed according to which foods containing some of the dominant molecules of the liquid green olive sauce were identified. Some of the foods analysed are listed in Table 2, along with the aromas given off by and the associated dominant molecule shared with the liquid green olive sauce.

**Table 2: Common foods with synergism with the liquid green sauce, separated by odour type and associated dominant molecule.**

| **Food** | **Aroma type** | **Dominant associated molecule** |
|---|---|---|
| Almonds | Bitter | Benzaldehyde |
| Cloves | Spicy | 2-Methoxyphenol |
| Green olive | Herbal | 2-Octenal |
| Meat | Animal | 4-Ethylphenol |
| Various cheeses | Buttery | Butanoic acid |
| Oil | Oily | 2,4-Decadienal |
| Black pepper | Balsamic | beta-Myrcene |
| Mustard | Earth | Allyl isothiocyanate |
| Citrus | Floral | Nonanal |
| Cinnamon | Wood | Humulene |
| Cloves | Smoked | Creosol |
| Onion | Creamy | Methyl-2-propenyl trisulfide |

### Example 4. Food products that can be combined with the liquid green olive sauce

Based on the results of Examples 1, 2 and 3, the inventors decided to use the liquid green olive sauce in combination with other food products to form new products. The combination was made only with products which share any dominant molecule with the liquid green olive sauce, and are presented in Table 3. Other examples not listed in the table were bloody caesar (celery, tomato and piparra with liquid green olive sauce), fried oysters with coriander and wasabi (coriander and wasabi with liquid green olive sauce) and green asparagus and shrimp foam (asparagus and chicory with liquid green olive sauce).

**Table 3: Novel foods created by virtue of characterizing the components of the liquid green olive sauce and the foods used as a base.**

| **Product** | **Dominant molecule** |
|---|---|
| Asparagus with olive juice mayonnaise | butanoic acid and allyl isothiocyanate |
| Anchovy with olive juice and piparra | 2-octenal, ethylphenol and 2,4-decadienal |
| Roasted onion with olive sauce | methyl-2-propenyl trisulfide and creosol |

### Example 5: Variants of the liquid green olive sauce

From the product of the following invention, and in combination with other ingredients, it is possible to obtain different variants of the liquid green olive sauce, with properties characteristic of each of the variants, which provide different nuances and allow its combination with certain foods.

**Table 4: Examples of variants of the liquid green olive sauce.**

| **Variant of the liquid green olive sauce** | **Ingredients** |
|---|---|
| Mediterranean style liquid green olive sauce | Liquid green olive sauce, rosemary, oregano, orange peel and thyme |
| Maghreb style liquid green olive sauce | Liquid green olive sauce, fresh mint, ginger paste, lemon peel, cumin grains and cinnamon |
| Italian style liquid green olive sauce | Liquid green olive sauce, anchovy sauce, parsley, basil and capers |
| Liquid green olive sauce with piparra | Liquid green olive sauce, crushed and filtered piparra, citric acid and xanthan gum |
| Liquid green olive sauce with chipotle | Liquid green olive sauce, chipotle chili, wine vinegar and xanthan gum |

## Claims

1. Liquid food composition comprising crushed pickled olives, **characterized in that** it comprises between 0.002 % and 0.4 % (w/w) of benzaldehyde, between 0.002 % and 0.25 % (w/w) of 2-methylbutanoic acid and between 0.012 % and 0.75 % (w/w) of nonanal.

2. Liquid food composition according to Claim 1, **characterized in that** it also comprises between 0.6 % and 12 % (w/w) of acetic acid.

3. Liquid food composition according to either of the preceding claims, **characterized in that** it also comprises between 0.01 % and 0.25 % (w/w) of 2-methoxyphenol.

4. Liquid food composition according to any one of the preceding claims, **characterized in that** it also comprises between 0.002 % and 0.04 % (w/w) of 2,4-decadienal.

5. Liquid food composition according to any one of the preceding claims, **characterized in that** it also comprises between 0.001 % and 0.03 % (w/w) of humulene.

6. Liquid food composition according to any one of the preceding claims, **characterized in that** it also comprises between 0.01 % and 0.2 % (w/w) of ethyl benzenepropanoate.

7. Liquid food composition according to any one of the preceding claims, **characterized in that** it also comprises between 0.01 % and 0.1 % (w/w) of dimethyl sulfoxide.

8. Liquid food composition according to any one of the preceding claims, **characterized in that** it also comprises between 0.04 % and 0.25 % (w/w) of (E)-2-octenal.

9. Liquid food composition according to any one of the preceding claims, **characterized in that** it also comprises between 0.1 % and 0.6 % (w/w) of beta-myrcene.

10. Liquid food composition according to any one of the preceding claims, **characterized in that** it comprises sulfur compounds selected from diallylsulfur, methanesulfonyl chloride, methyl-2-propenyl trisulfide, allyl isothiocyanate or a mixture thereof.

11. Liquid food composition according to Claim 10, **characterized in that** it comprises between 0.003 % and 0.1 % (w/w) of diallyl sulfide.

12. Liquid food composition according to Claim 10, **characterized in that** it comprises between 0.003 % and 0.09 % (w/w) of methanesulfonyl chloride.

13. Liquid food composition according to Claim 10, **characterized in that** it comprises between 0.003 % and 0.08 % (w/w) of methyl-2-propenyl trisulfide.

14. Liquid food composition according to Claim 10, **characterized in that** it comprises between 0.01 % and 0.27 % (w/w) of allyl isothiocyanate.

15. Liquid food composition according to any one of the preceding claims, **characterized in that** it comprises phenolic compounds selected from creosol, 4-ethyl-2-methoxyphenol, p-creosol, 2-methoxy-4-propylphenol, 4-ethylphenol or a mixture thereof.

16. Liquid food composition according to Claim 15, **characterized in that** it comprises between 0.1 % and 2.9 % (w/w) of creosol.

17. Liquid food composition according to Claim 15, **characterized in that** it comprises between 0.002 % and 0.06 % (w/w) of 4-ethyl-2-methoxyphenol.

18. Liquid food composition according to Claim 15, **characterized in that** it comprises between 0.002 % and 0.06 % (w/w) of p-creosol.

19. Liquid food composition according to Claim 15, **characterized in that** comprises between 0.0008 % and 0.02 % (w/w) of 2-methoxy-4-propylphenol.

20. Liquid food composition according to Claim 15, **characterized in that** it comprises between 0.2 % and 6.4 % (w/w) of 4-ethylphenol.

21. Liquid food composition according to any one of the preceding claims, **characterized in that** it is contained inside a spherical capsule.

22. Liquid food composition according to Claim 21, **characterized in that** said capsule in which it is contained is formed by an alginate film of an alkaline-earth metal selected from calcium and magnesium.

23. Liquid food composition according to Claim 22, **characterized in that** the alkaline-earth metal is calcium.

24. Liquid food composition, according to any one of Claims 21 to 23, **characterized in that** the size of said capsules is between 2 mm and 50 mm in diameter.

25. Liquid food composition according to Claim 24, **characterized in that** the size of the capsules is between 4 mm and 50 mm in diameter.

26. Liquid food composition according to Claim 25, **characterized in that** the size of the capsules is between 8 mm and 50 mm in diameter.

27. Liquid food composition according to any one of Claims 1 to 26, **characterized in that** it also comprises a food product selected from cabbage, cauliflower, horseradish, capers, black truffle, arugula, hops, almonds, wasabi, almonds, cloves, smoked cloves, green olive, cheese, black pepper, mustard, citrus fruits, cinnamon, onion, asparagus, anchovy, celery, tomato, piparra, coriander, rosemary, oregano, thyme, citrus peel, mint, ginger, cumin, cinnamon, anchovy, parsley, basil, capsicum, chili, or a combination thereof.

28. Liquid food composition according to Claim 27, **characterized in that** said additional food product is in its natural, processed or pickled form.

29. Pairing method, **characterized in that** it involves combining a food composition, according to any one of Claims 1 to 26, with one or more food products comprising the same compounds as said food composition.

30. Pairing method according to Claim 29, **characterized in that** said food product for pairing with the food composition according to any one of Claims 1 to 26 is selected from the group comprising cabbage, cauliflower, horseradish, capers, black truffle, arugula, hops, almonds, wasabi, almonds, cloves, cloves, smoked cloves, green olives, cheese, black pepper, mustard, citrus fruits, cinnamon, onion, asparagus, anchovy, celery, tomato, piparra, coriander, rosemary, oregano, thyme, citrus fruit peel, mint, ginger, cumin, cinnamon, anchovy, parsley, basil, capsicum, chili, or a combination thereof.

31. Pairing method according to Claim 30, **characterized in that** said food products may be natural, processed or pickled.
